(19) Europäisches Patentamt / European Patent Office / Office européen des brevets

(11) **EP 2 883 342 B1**

(12) **EUROPEAN PATENT SPECIFICATION**

(45) Date of publication and mention
of the grant of the patent:
**04.10.2017 Bulletin 2017/40**

(21) Application number: **13750989.9**

(22) Date of filing: **01.08.2013**

(51) Int Cl.:
***H04L 29/08*** (2006.01)          ***G06F 9/44*** (2006.01)

(86) International application number:
**PCT/US2013/053269**

(87) International publication number:
**WO 2014/028234 (20.02.2014 Gazette 2014/08)**

(54) **VIRTUAL DESKTOP POLICY CONTROL**

RICHTLINIENKONTROLLE FÜR VIRTUELLEN DESKTOP

CONTRÔLE DE POLITIQUE DE BUREAU VIRTUEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2012 US 201213584664**

(43) Date of publication of application:
**17.06.2015 Bulletin 2015/25**

(73) Proprietor: **Cisco Technology, Inc.**
**San Jose, CA 95134 (US)**

(72) Inventors:
• **CHOKSHI, Jayesh, A.**
**Cupertino, CA 95014 (US)**
• **IYER, Natraj**
**Milpitas, CA 95035 (US)**
• **SABOOWALA, Huseni, Hakim**
**Fremont, CA 94555 (US)**
• **PRASAD, Chandrodaya**
**Santa Clara, CA 95051 (US)**

(74) Representative: **Kazi, Ilya et al**
**Mathys & Squire LLP**
**The Shard**
**32 London Bridge Street**
**London SE1 9SG (GB)**

(56) References cited:
**EP-A1- 2 442 226     US-A1- 2006 218 285
US-B1- 8 141 075**

## Description

### FIELD

The present disclosures relate to policy control for virtual desktop infrastructure or virtual desktop interfaces (VDI) sessions.

### BACKGROUND

VDI or desktop virtualization provides information services to remote users through a wide area network (WAN). The operating systems and hardware architectures for the remote users are independent from the systems providing the information services. Desktop virtualization is a shared resource model that can be advantageous over the traditional model of personal computers in which each personal computer operates with its own operating system and set of applications. Installation, administration and configuration of the applications are more efficient. Further, because resources are provided as needed, the total cost of the system may be reduced.

However, VDI sessions may require high bandwidth, placing a heavy burden on the WAN. In some situations, the addition of one more VDI session can severely deteriorate the session for all of the remote users. The addition of one additional VDI session may disproportionately detriment previously established VDI sessions.

US 8 141 075 B1 describes a system and method for using rules to automate the provisioning of remote desktops based on policies on a virtualized computer platform.

### BRIEF DESCRIPTION OF THE DRAWINGS

Figure 1 illustrates an embodiment of a communication system for virtual desktop policy control.
Figure 2 illustrates an example network device of the embodiment of Figure 1.
Figure 3 illustrates another embodiment of a communication system for virtual desktop policy control.
Figure 4 illustrates an example flow chart for virtual desktop policy control.

### DETAILED DESCRIPTION

### OVERVIEW

The invention concerns a method according to claim 1.

The invention further concerns a network device according to claim 7.

The invention further concerns a computer readable storage medium storing instructions executable by a processor according to claim 13.

Many enterprises employ virtual desktop infrastructure or virtual desktop interface (VDI) systems to save capital expenses and/or operating expenses. However, most enterprises using VDI deployments do not have unlimited or otherwise expansive bandwidth. For example, many VDI employments rely on connections equal or less than 1.5 Mbps (e.g., T1 line). For example, branch offices or locations on a wide area network (WAN) may have bandwidth constraints. The following embodiments effectively expand the bandwidth constraints to increase the number of sessions supported by VDI systems by limiting the bandwidth of certain VDI sessions, or selectively permitting only prioritized VDI sessions to be established, or both.

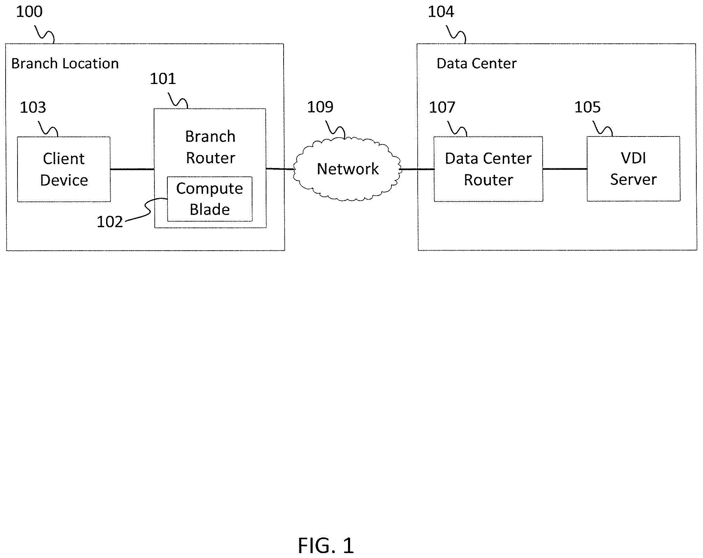

Figure 1 illustrates an embodiment of a communication system for virtual desktop policy control. The communication system includes a branch location 100 and a data center 104. The branch location 100 and the data center 104 are configured to communicate with one another via a network 109. The network 109 may be a WAN. The communication system may include multiple branch locations 100 that each include one or more client devices 103 and one or more network devices, such as a branch router 101.

The client devices 103 include at least one of a work station, a personal computer, a laptop, a personal digital assistant, a smartphone, or any communication enabled computing device. The client devices 103 may include one or more thin-client hardware devices. Thin-client hardware devices, or slim devices, provide some computing services via a user interfaces but communicate with a server (e.g., VDI server 105) for a majority of computing processes accessed by users. In one example, the thin-client hardware device includes a graphical display, a user interface, and the processing capabilities necessary to communicate with the VDI server 105.

The client devices 103 are configured to communicate with the branch router 101 through any type of connection including but not limited to one or more of an Ethernet connection, a telephone connection, a cellular connection, or another type of wireless connection defined by 802.11 or Bluetooth protocols.

The branch location 100 includes at least the client device 103 and the branch router 101. The data center 104 includes at least the VDI server 105 and the data center router 107. The branch router 101, alone or in combination with branch routers in other branch locations, initiate sessions, such as a VDI session, with the data center 104 that are hosted by the VDI server 105.

A VDI session can be established between a piece of software on the client device 103 and the VDI server 105. Typically, establishing this session involves the user invoking software on the client device 103, followed by an authenticated login procedure. Once the VDI session is established, two-way exchange of information between the client device 103 and the VDI server 105 can commence via the branch router 101. Input information from a user interface, such as a mouse, keyboard and/or other peripherals on the client device 103 can be sent via the branch router 101 to the VDI server 105 in one direction. On the other hand, graphical information, such as screen bitmap information, can be sent from the VDI server 105 via the branch router 101 to the graphical display on the client device 103. In one example, the graphical information can be sent using a display protocol. The display protocol, for example, may help to optimize the sending of graphic changes, such as bitmap changes, over the network.

The branch router 101 detects and counts the total number of current VDI sessions managed by the branch router 101. The branch router 101 may receive data from the VDI server 105 indicative of the total number of current VDI sessions, or the branch router 101 may count the number of sessions originating with the branch location 100. The branch router 101 compares a current count of the number of VDI sessions to a predetermined threshold capacity of VDI sessions managed by the branch router 101. The predetermined threshold capacity may be set by a VDI administrator. The predetermined threshold capacity of the branch router 101 may be determined by the VDI administrator depending on system parameters, such as the WAN bandwidth available at the branch router 101 for VDI traffic. The predetermined threshold capacity of the number of sessions may also be influenced by an estimate of bandwidth needed by each VDI session being managed by the branch router 101. Thus, in one example, the predetermined threshold capacity of the number of sessions of the branch router 101 may be determined by:

$$\text{Threshold Capacity} = \text{WAN bandwidth available for VDI} / \text{Estimated bandwidth per VDI session.}$$

The predetermined threshold capacity of the branch router 101 may be entered directly to an interface connected to the VDI server 105 or the branch router 101 or remotely through the network 109.

When the branch router 101 receives a request for a new session, the branch router 101 forwards the request for the new session. In one example, the request may be forwarded according to the comparison of the number of currently managed VDI sessions to the predetermined threshold capacity of the branch router 101. The branch router 101 may forward the request by writing a policy field to the request. For example, if the current number of VDI sessions at the branch router 101 is less than the predetermined threshold capacity of the branch router 101, the branch router 101 may indicate this information in the policy field, and the new session may be established with the VDI server 105 according full access. If, on the other hand, the current number of VDI sessions of the branch router 101 is greater than the predetermined threshold capacity of the branch router 101, the branch router 101 may indicate this information in the policy field, and the new session may be established with the VDI server 105 according to partial access or no access.

Partial access may be defined as less than a complete virtual desktop (e.g., a partial virtual desktop). The partial virtual desktop may include, for example, only mission critical applications. The mission critical applications may be defined by one or more of a criticality value or a bandwidth requirement value. Further, if the current number of sessions is greater than the predetermined threshold capacity of the branch router 101, the new session may also include the partial desktop of applications. The partial desktop of applications may be executed by a compute blade 102 included in the branch router 101 that accesses limited data (e.g., less than optimal data or periodic data) from the VDI server 105.

A chassis of the branch router 101 may be populated with one or more compute blades 102. The compute blade 102 may include a processor that is separate from the processor used for the branch router's control/data/management plane functions. In addition, the compute blade 102 may be used to host applications and services, such as VDI services. Thus, the compute blade 102 may allow management of partial desktop applications by the branch router 101 without significantly increasing the processing burden on the processor used for the branch router's control/data/management plane functions. Alternatively, or in addition, the partial desktop applications may be executed by the processor of the branch router 101, or any other device in communication with the branch router 101.

The criticality value of a plurality of application may be configured by the administrator of the branch location 100. The criticality value may have at least two possible values (e.g., critical and non-critical) or the criticality value may be a rating on a scale (e.g., a scale from one to ten). The bandwidth requirement value of a plurality of applications may be configured by the administrator of the branch location 100. The bandwidth requirement value may have at least two possible values (e.g., high bandwidth and low bandwidth), the bandwidth requirement value may be a rating on a scale, or the bandwidth requirement value may be proportional to the actual bandwidth requirement measured in bitrate (e.g., kilobytes/second, megabytes/second).

When the number of sessions exceeds or equals the maximum threshold of the branch router 101, the new session may be denied or delayed by the branch router 101. Alternatively, the branch router 101 may host the partial virtual desktop with no communication to the VDI server 105. The branch router 101 may rely on cached data or estimated data rather than communication with the data center 104.

In addition or in the alternative, the branch router 101 may be configured to receive a policy value for the user that requested the VDI session. When the branch router 101 receives a request for a new session from the user, the branch router 101 forwards the request for the new session according to a comparison of the policy value to a threshold policy value.

The network 109 facilitates data communication between the data center 104 and the branch offices 100 through a variety of protocols in lower three layers of the OSI reference model: the physical layer, the data link layer, and the network layer. The network 109 may communicate over or in cooperation with the Internet. The client device 103 and the branch location 100 that requests data from the VDI server 105 may be at one geographic location, and the data center 104 and the VDI server 105 may be at another geographic location.

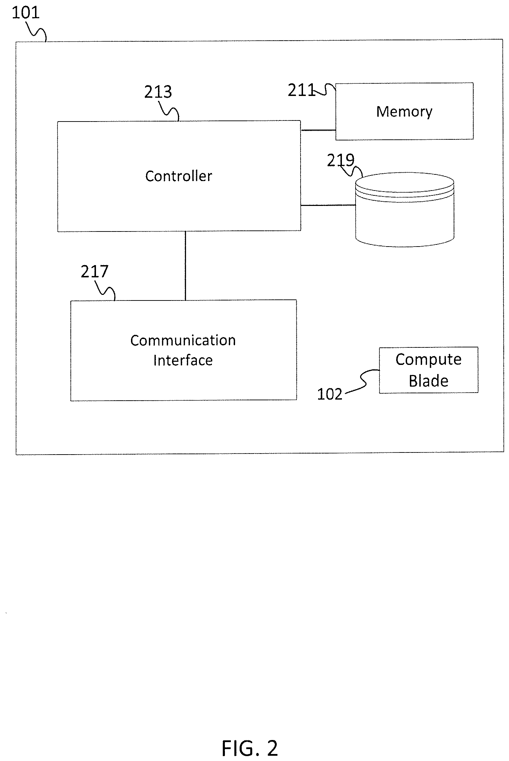

Figure 2 illustrates an example network device of the embodiment of Figure 1. The network device may be the branch router 101. The chassis of the branch router 101 may be populated with at least one compute blade 102 to run applications and/or services. In addition, the branch router 101 may include a memory 211, a controller or processor 213, a communication interface 217, and a database 219. Alternatively, the embodiments described below may be incorporated into any of a variety of network devices includes servers, switches, or gateways.

The memory 211 stores at least one of a predetermined threshold capacity of VDI sessions for the branch router 101 or a predetermined threshold priority value of a user to establish a session with the VDI server 105. One or both of the predetermined threshold capacity for the branch router 101, and the predetermined threshold priority value may be set, configured, or adjusted by an administrator device. The administrator device may be accessed by an administrator of the communication system through communication with the branch router 101 or the VDI server 105.

The plurality of branch locations 100 may have independently set and configurable predetermined threshold capacity values and predetermined threshold priority values. Examples for the predetermined threshold capacity values for the number of VDI sessions include 5, 10, 100 or any integer value. Examples for the predetermined threshold prior values may be on a scale (e.g., a scale from 1 to 5 where 5 is the highest priority). The controller 213 is configured to receive one or more of the predetermined threshold capacity for the branch location 100 and the predetermined threshold priority value from the administrator or an input device and write either or both values to memory 211. The controller 213 may be configured to establish a new session when the priority is a high priority and deny a new session when the priority is a low priority. Whether the priority is high or low may be defined based on the comparison with the predetermined threshold priority value. The controller 213 may be configured to generate a denial message that indicates that the new session has been denied when the number of sessions for the branch router 101 is greater than the predetermined threshold capacity and the priority is less than the predetermined priority threshold.

The communication interface 217 may be configured to receive a request for a VDI session through communication with network 109 from a client device 103. The request for the VDI session can include a network address of a server, such as the address of a VDI broker/server and authentication information. The VDI session request can be vendor dependent, such as a VMware™ view or a Citrix Xendesktop™

The controller or processor 213 is configured to receive the request for the VDI session and increment the number of current VDI sessions stored in the memory 211. The processor 213 compares the number of current VDI sessions managed by the branch router 101 to the predetermined threshold capacity value stored in the memory 211. The processor 213 is configured to forward the request for the VDI session according to the comparison.

In one embodiment, the processor 213 is configured to monitor the number of sessions with respect to the predetermined threshold capacity and connect the client device 103 to the data center 104 when the number of sessions is below the predetermined threshold capacity.

In one embodiment, when the current number of VDI sessions managed by the branch router 101 exceeds the predetermined threshold capacity, the new request for a VDI session is denied. When the current number of VDI sessions does not exceed the predetermined threshold capacity, the request for the VDI session is forwarded to the data center 104 and/or the VDI server 105.

In another embodiment, when the user's priority exceeds the priority threshold, and the current number of VDI sessions exceeds the predetermined threshold capacity, the new request is handled by the branch router 101. For example, the branch router 101 may execute a partial virtual desktop, which is discussed in more detail below. When the current number of VDI sessions does not exceed the predetermined threshold capacity of the branch router 101, the request for the VDI session is forwarded to the data center 104 and/or the VDI server 105.

The partial virtual desktop may be defined on a branch level or on a user level. The partial virtual desktop includes less than all of the applications normally available at the branch or to the user. All of the applications normally available may be referred to as a complete desktop. The partial virtual desktop may include only mission critical applications. Mission critical applications are software applications that are necessary to accomplish a primary function of the user, of the branch location 100, or of the enterprise. Mission critical applications may be listed by a data file or a user specific profile stored in the memory 211 and configurable by the administrator.

To the extent that the desktop is generic to one or more users of a job function or a branch location 100, the partial virtual desktop may be referred to as a generic desktop. Even though the generic desktop is less than a complete desktop, the generic desktop may include user selectable features that present a normal appearance or feel to the user. Such user selectable features may include, wallpaper, icons, menu settings, color settings, registry settings, and other features. The user selectable features and settings may be stored in a user desktop configuration file in the memory 211.

The partial virtual desktop may be provided independently by the branch router 101 alone. Alternatively, or in addition, the partial virtual desktop may be provided by the branch router 101 with supplemental data from the data center 104 or the VDI server 105. That is, in some scenarios, all of the data necessary to support at least one mission critical application running on the branch router 101 is stored in memory 211 or otherwise available to the branch router 101 without receiving data from the network 109. The WAN may be inoperable but services are still provided to the client device 103. In other scenarios, at least one mission critical application running on the branch router 101 communicates through the network 109 to receive data to run the mission critical applications. Examples include a bank teller application that receives account information and balances from the data center 104 but can be executed at the branch location 100, or a point of sale application that receives credit card authorization or inventory information from the data center 104 but can be executed at the branch location 100.

In an example embodiment, in scenarios in which at least one mission critical application is running on the branch router 101 but accessing data from the data center 104, the request for a VDI session may be modified before sending the request to the VDI server 105. The modification may flag the request to indicate that the bandwidth to the branch location 100 is nearing capacity or that the request should be allocated only limited data or a limited VDI session. The processor 213 may be configured to make such a modification to a limited VDI session if the number of current VDI sessions is greater than the predetermined threshold capacity for the branch router 101.

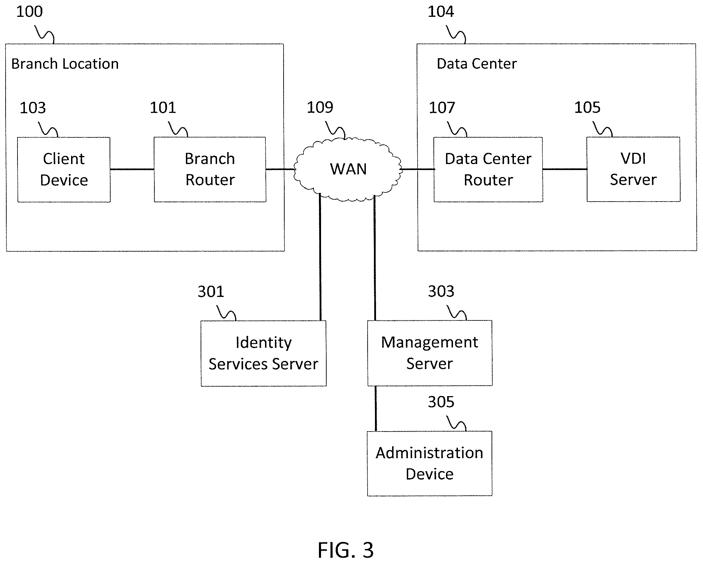

Figure 3 illustrates another embodiment of a communication system for virtual desktop policy control. The communication system includes a branch location 100 and a data center 104, as discussed above. The communication system also includes an identity services server 301, a management server 303, and an administration device 305. The identity services server 301 may include an identity service engine (ISE) for policy definitions. The ISE policy definitions apply a priority value to users, devices, or locations.

For example, the ISE may include a database or a lookup table that assigns priority values according to user roles, job functions, or classifications in the branch location 100. Examples may include engineer, accountant, programmer, human resources associate, or information technology specialist. The ISE may associate each role to a generic desktop and/or a subset of available applications. For example, a programmer may be associated with developer software and a human resources associate may be associated with payroll software. The branch router 101 may be configured to access the policy or priority value of the user of the client device 103 from the ISE database and define the generic desktop and/or subset of available applications according to the job function or classification of the user.

In another example, the ISE database or lookup table may associate priority values according to specific devices, types of devices, or connection types. Wired devices directly connected to the network of the branch location 100 may have a higher priority than wireless devices using Wi-Fi or Bluetooth. Authenticated devices may have a higher priority than guest devices. Personal computers may have a higher priority than smartphones and/or tablets.

In another example, the ISE database or lookup table may additionally or alternatively associate priority values according to time and location. Devices (e.g., guest devices or unauthenticated devices) may be associated with a higher priority during off-peak hours (e.g., after 5 P.M.) than during peak hours. Devices located in secured areas may be associated with a higher priority than devices located in public areas.

In any of the above examples, the processor 213 queries the lookup table or database 219 by way of the identity services server 301 for the priority values associated with each client device 103, such as when the client device requests a VDI session. The communication interface 217 receives the priority value associated with the request for the VDI session from the ISE of the identity services server 301. Alternatively, the ISE may be included in the branch router 101 in database 219.

The processor 213 determines whether or not to allow the VDI session or whether or not to allow only limited access to the VDI session depending on the number of current VDI session managed by the branch router 101, and the priority value associated with the VDI session. For example, the processor 213 is configured to forward the request for the VDI session if the priority value is greater than a predetermined threshold priority value. The processor 213 may be configured to modify the request for the VDI session to a request for a limited VDI session if the priority value is less than the predetermined threshold priority value. The VDI server 105 interprets the request for the limited VDI session to provide limited information to the VDI session. Limited information may include only mission critical data.

Alternatively, one or both of the predetermined threshold capacity for the branch router 101, and the predetermined threshold priority value may be dynamically adjusted according to a network performance parameter. The network performance parameter may include speed, throughput, latency, packet loss, quality of service (QoS) or another parameter. For example, branch router 101 may be configured to detect a speed of one or more existing VDI sessions. In addition, the branch router 101 may increase the predetermined threshold capacity as the speed increases, and decrease the predetermined threshold capacity as the speed decreases. Alternatively, or in addition, the branch router 101 may be configured to increase the predetermined threshold priority value as the speed increases and to decrease the predetermined threshold priority value as the speed decrease. Any of the network performance parameters may be detected to adjust one or both of the predetermined threshold capacity for the branch router 101 and the predetermined threshold priority value.

The management server 303 provides remote access, configuration, and administration for the branch router 101 and the VDI server 105. The management server 303 may perform the comparison of the number of sessions currently hosted by the VDI server 105 to the predetermined threshold capacity. The branch router 101 may report the count of the number of sessions managed by the branch router 101 to the management server 303. Alternatively, the branch router 101 may generate a message including data indicative of the comparison of the number of sessions to the threshold capacity and send the message to the management server 303.

The administration device 305 is configured to receive commands from an administrator regarding the configuration of the branch router 101 or the VDI server 105. One or both of the predetermined threshold capacity for the branch router 101 and the predetermined threshold priority value may be set, configured, or adjusted by an administrator device 305. The administrator device 305 may be accessed by an administrator of the communication system through communication with the branch router 101, the VDI server 105, or the management server 303, as shown by Figure 3.

The memory 211 may be any known type of volatile memory or a nonvolatile memory. The memory 211 may include one or more of a read only memory (ROM), dynamic random access memory (DRAM), a static random access memory (SRAM), a programmable random access memory (PROM), a flash memory, an electronic erasable program read only memory (EEPROM), static random access memory (RAM), or other type of memory. The memory 211 may include an optical, magnetic (hard drive) or any other form of data storage device. The memory 211 may be located in a remote device or removable, such as a secure digital (SD) memory card.

The memory 211 may store computer executable instructions for filtering and routing communication session requests. The controller 213 may execute computer executable instructions. The computer executable instructions may be included in computer code. The computer code may be written in any computer language, such as C, C++, C#, Java, Pascal, Visual Basic, Perl, HyperText Markup Language (HTML), JavaScript, assembly language, extensible markup language (XML) and any combination thereof.

The computer code may be stored in one or more tangible media or one or more non-transitory computer readable storage media for execution by the controller 213. A computer readable storage medium may include, but is not limited to, a floppy disk, a hard disk, an application specific integrated circuit (ASIC), a compact disk CD, other optical medium, a random access memory (RAM), a read only memory (ROM), a memory chip or card, a memory stick, and other media from which a computer, a processor or other electronic device can read.

The controller or processor 213 may include a general processor, digital signal processor, application specific integrated circuit, field programmable gate array, analog circuit, digital circuit, server processor, combinations thereof, or other now known or later developed processor. The controller or processor 213 may be a single device or combinations of devices, such as associated with a network or distributed processing. Any of various processing strategies may be used, such as multi-processing, multi-tasking, parallel processing, remote processing, centralized processing or the like. The controller or processor 213 may be responsive to or operable to execute instructions stored as part of software, hardware, integrated circuits, firmware, micro-code or the like.

The communication interface 217 may include any operable connection. An operable connection may be one in which signals, physical communications, and/or logical communications may be sent and/or received. An operable connection may include a physical interface, an electrical interface, and/or a data interface. An operable connection may include differing combinations of interfaces and/or connections sufficient to allow operable control. For example, two entities can be operably connected to communicate signals to each other or through one or more intermediate entities (e.g., processor, operating system, logic, software). Logical and/or physical communication channels may be used to create an operable connection. As used herein, the phrases "in communication" and "coupled" are defined to mean directly connected to or indirectly connected through one or more intermediate components. Such intermediate components may include both hardware and software based components.

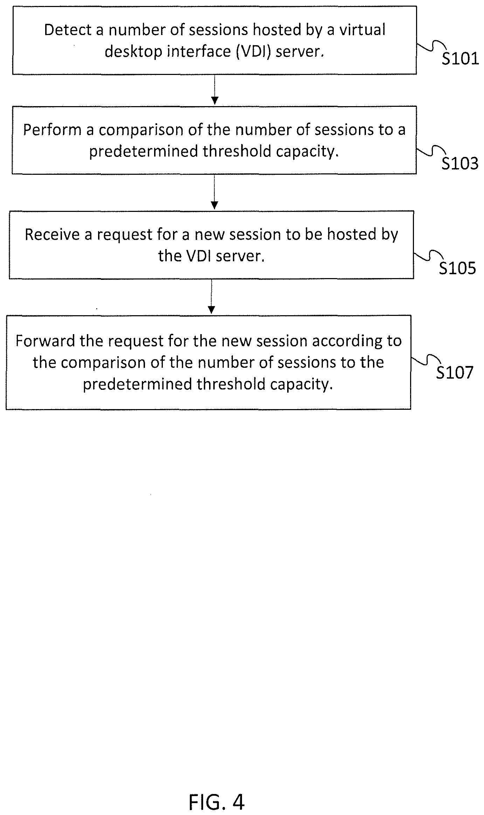

Figure 4 illustrates an example flow chart for virtual desktop policy control. The algorithm in the example flow chart may be performed by a network device, such as controller 213 of the branch router 101. Alternatively, the algorithm of the example flow chart may be performed by a comparable controller or processor in the VDI server 105, the management server 303, or another network device.

At act S101, the controller detects a number of sessions hosted by the VDI server 105 that are being managed by the branch router 101. The sessions originate with client devices 103. The client devices 103 may be located in the branch location 100 or spread across more than one branch location 100. The sessions from each branch location or group of branch locations share a limited amount of bandwidth for communication with the data center 104 via the branch router 101.

At act S103, the controller performs a comparison of the number of sessions to a predetermined threshold capacity of the branch router 101. The predetermined threshold capacity may be stored locally in memory. The predetermined threshold capacity may be assigned to the branch location 100 by an administrator or the predetermined threshold capacity may be dynamically determined by the controller according to diagnostics of the network 109 or a particular data flow for an existing VDI session.

Optionally or in addition, the controller may perform a comparison of a priority associated with the new session from an identity services engine (ISE). The network device is configured to execute software applications when the number of sessions is less than the predetermined threshold capacity and when the number of sessions is greater than the predetermined threshold capacity and the priority is greater than a predetermined priority threshold. The priority may indicate the type of device (e.g., mobile devices versus permanent devices), the location of the device (secured location versus public location), the connection type of the device (secured connection versus public connection), or the credentials of the user. The credentials of the user may relate to access rights or the classification of the user. The classification may define the type of work, and accordingly, software applications that the user requires.

At act S105, the controller receives a request for a new session to be hosted by the VDI server 105. The request for the new session may identify the priority of the client device 103 or user that initiated the request. The request for the new session may include a source address of the client device 103.

At act S107, the controller forwards the request for the new session according to the comparison of the number of sessions to the predetermined threshold capacity of the branch router 101 and/or the comparison of the priority from the ISE to the priority threshold. In one example, the controller is configured to identify three possibilities for forwarding the request.

In a first possibility, when the number the number of sessions is more than a maximum threshold capacity for the branch router 101, no new sessions can be established. The controller is configured to generate a denial message indicating that the new session has been denied and transmit the denial message to the client device 130 that requested the new session.

In a second possibility, when the number of sessions is more than the predetermined threshold capacity and less than maximum threshold capacity for the branch router 101, the controller may forward the request to the VDI server 105 with partial access. Alternatively, the control may perform additional analysis. For example, the additional analysis may involve the policy of the user of the client device 130. When the policy is rated higher than the predetermined priority, the controller forwards the request to the VDI server 105 with partial access, but when the policy is rater lower than the predetermined priority, the controller denies or delays the request for the new VDI session.

Partial access may include less than all application normally available to the client device 130 from the VDI server 105 in a VDI session. Partial access may include provision by the branch router 101 of a generic desktop to the client device 130 that requested the new session. The generic desktop may configured by the administrator or defined according to the job description of the user.

Various embodiments described herein can be used alone or in combination with one another. The foregoing detailed description has described only a few of the many possible implementations of the present embodiments. For this reason, this detailed description is intended by way of illustration, and not by way of limitation.

## Claims

**1.** A method comprising:

detecting, via a processor (123) at a branch router (101), a number of sessions hosted by a virtual desktop interface, VDI, server (105) that are being managed by the branch router (101) (S101);
performing, via the processor, a comparison of the number of sessions to a predetermined threshold capacity of the branch router (S103);
receiving at the branch router a request for a new session to be hosted by the VDI server (S105); and
forwarding the request for the new session according to the comparison of the number of sessions to the predetermined threshold capacity (S107), **characterized by** if the number of sessions is greater than the predetermined threshold capacity of the branch router, before forwarding the request to the VDI server, modifying the request for the new session to a request for a limited VDI session.

**2.** The method of claim 1, wherein the number of sessions is more than the predetermined threshold capacity and less than a maximum threshold capacity for the branch router.

**3.** The method of claim 2, further comprising:

receiving a priority associated with the new session from an identity services engine, optionally further comprising:

establishing the new session when the priority is a high priority; and
denying the new session when the priority is a low priority.

**4.** The method as in any of claims 1 - 3, further comprising:

establishing the new session with a generic desktop including one or more applications configured to be executed by the VDI server, optionally wherein the generic desktop includes at least one application defined according to a policy of a user that initiated the request for the new session.

**5.** The method as in any of claims 1 - 4, further comprising:

monitoring the number of sessions with respect to the predetermined threshold capacity; and
connecting the new session to a data center (104) when the number of sessions is below the predetermined threshold capacity.

**6.** The method as in any of claims 1 - 5, further comprising:

generating a message including data indicative of the comparison of the number of sessions to the predetermined threshold capacity; and
sending the message to a management server (303).

**7.** A network device (101) comprising:

a communication interface (217) configured to receive a request for a virtual desktop interface, VDI, session with a VDI server;
a memory (211) configured to store data indicative of a number of current VDI sessions being managed by the network device that are being hosted by the VDI server and a predetermined threshold capacity for the network device; and
a processor (213) configured to compare the number of current VDI sessions to the predetermined threshold capacity for the network device, and forward the request if the number of current VDI sessions is less than the predetermined threshold capacity for the network device, **characterized in that** it is further configured to, if the number of current VDI sessions is greater than the predetermined threshold capacity for the network device, before forwarding the request, modify the request for the VDI session to a request for a limited VDI session.

**8.** The network device of claim 7, wherein the processor is configured to deny the request for the VDI session if the number of current VDI sessions is equal to a maximum threshold capacity for the network device.

**9.** The network device as in any of claims 7 - 8, wherein the communication interface is configured to receive a priority value associated with the request for the VDI session from an identity services engine.

**10.** The network device of claim 9, wherein the processor is configured to forward the request for the VDI session if the priority value is greater than a predetermined threshold priority value.

**11.** The network device of claim 10, wherein the processor is configured to modify the request for the VDI session to a request for a limited VDI session if the priority value is less than the predetermined threshold priority value.

**12.** The network device of claim 11, wherein the processor is configured to host a generic desktop including at least one mission critical application but less than a complete desktop for a user that initiated the request for the VDI session.

**13.** A computer readable storage medium storing instructions, the stored instructions executable by a processor (213) to:

receive, at a network device (101), a request for a new session to be hosted by a virtual desktop interface, VDI, server (105);

compare a number of sessions currently hosted by the virtual desktop interface, VDI, server via the network device to a predetermined threshold capacity of the network device;

forward the request for the new session to the VDI server when the number of sessions is less than the predetermined threshold capacity, and **characterized in that** the instructions are executable to, if the number of sessions currently hosted is greater than the predetermined threshold capacity of the network device, before forwarding the request, modify the request for the new session to a request for a limited VDI session.

14. The computer readable storage medium of claim 13, further comprising instructions executable by the processor to:

receive a priority associated with the new session from an identity services engine; and
execute at least one application at the network device in response to the number of sessions being greater than the predetermined threshold capacity and the priority being greater than a predetermined priority threshold, optionally further comprising instructions executable by the processor to:

generate a denial message indicating that the new session has been denied in response to the number of sessions being greater than the predetermined threshold capacity and the priority being less than the predetermined priority threshold; and
transmit the denial message for receipt by a client device that requested the new session.

15. The computer readable storage medium as in any of claims 13 - 14, further comprising instructions executable by the processor to:

provide a generic desktop to a client device in response to the request for the new session, wherein the generic desktop includes the at least one application executed at the network device, optionally further comprising instructions executable by the processor to:

access a policy of a user of the client device from a policy database (219), wherein the policy database associates the user with the at least one application defined by a job function or classification of the user; and
define the generic desktop according to the job function or classification of the user.

## Patentansprüche

1. Verfahren, das Folgendes beinhaltet:

Erkennen, über einen Prozessor (123) an einem Zweig-Router (101), einer Reihe von von einem VDI-(Virtual Desktop Interface)-Server (105) gehosteten Sitzungen, die von dem Zweig-Router (101) (S101) verwaltet werden;
Durchführen, über den Prozessor, eines Vergleichs der Anzahl von Sitzungen mit einer vorbestimmten Schwellenkapazität des Zweig-Routers (S103);
Empfangen, an dem Zweig-Router, einer Anforderung für eine neue Sitzung, die von dem VDI-Server (S105) gehostet werden soll; und
Weiterleiten der Anforderung für die neue Sitzung gemäß dem Vergleich der Anzahl von Sitzungen mit der vorbestimmten Schwellenkapazität (S107), **dadurch gekennzeichnet, dass**, wenn die Anzahl von Sitzungen größer ist als die vorbestimmte Schwellenkapazität des Zweig-Routers, die Anforderung vor dem Weiterleiten zum VDI-Server für die neue Sitzung in eine Anforderung für eine begrenzte VDI-Sitzung modifiziert wird.

2. Verfahren nach Anspruch 1, wobei die Anzahl von Sitzungen größer als die vorbestimmte Schwellenkapazität und kleiner als eine maximale Schwellenkapazität für den Zweig-Router ist.

3. Verfahren nach Anspruch 2, das ferner Folgendes beinhaltet:

Empfangen einer mit der neuen Sitzung assoziierten Priorität von einer Identitätsdienstemaschine, das optional ferner Folgendes beinhaltet:

Einrichten der neuen Sitzung, wenn die Priorität eine hohe Priorität ist; und
Verweigern der neuen Sitzung, wenn die Priorität eine niedrige Priorität ist.

**4.** Verfahren nach einem der Ansprüche 1-3, das ferner Folgendes beinhaltet:

Einrichten der neuen Sitzung mit einem generischen Desktop mit einer oder mehreren Anwendungen, die zum Ausführen durch den VDI-Server konfiguriert sind, wobei optional der generische Desktop wenigstens eine Anwendung beinhaltet, die gemäß einer Richtlinie eines Benutzers definiert ist, die die Anforderung für die neue Sitzung eingeleitet hat.

**5.** Verfahren nach einem der Ansprüche 1-4, das ferner Folgendes beinhaltet:

Überwachen der Anzahl von Sitzungen mit Bezug auf die vorbestimmte Schwellenkapazität; und
Verbinden der neuen Sitzung mit einer Datenzentrale (104), wenn die Anzahl von Sitzungen unter der vorbestimmten Schwellenkapazität liegt.

**6.** Verfahren nach einem der Ansprüche 1-5, das ferner Folgendes beinhaltet:

Erzeugen einer Nachricht, die Daten enthält, die den Vergleich der Anzahl von Sitzungen mit der vorbestimmten Schwellenkapazität anzeigen; und
Senden der Nachricht zu einem Managementserver (303).

**7.** Netzwerkgerät (101), das Folgendes umfasst:

eine Kommunikationsschnittstelle (217), konfiguriert zum Empfangen einer Anforderung für eine VDI-(Virtual Desktop Interface)-Sitzung mit einem VDI-Server;
einen Speicher (211), konfiguriert zum Speichern von Daten, die eine Anzahl von vom Netzwerkgerät verwalteten aktuellen VDI-Sitzungen anzeigen, die von dem VDI-Server gehostet werden, und einer vorbestimmten Schwellenkapazität für das Netzwerkgerät; und
einen Prozessor (213), konfiguriert zum Vergleichen der Anzahl von aktuellen VDI-Sitzungen mit der vorbestimmten Schwellenkapazität für das Netzwerkgerät und zum Weiterleiten der Anforderung, wenn die Anzahl von aktuellen VDI-Sitzungen kleiner ist als die vorbestimmte Schwellenkapazität für das Netzwerkgerät, **dadurch gekennzeichnet, dass** es ferner zum Modifizieren, wenn die Anzahl von aktuellen VDI-Sitzungen größer ist als die vorbestimmte Schwellenkapazität für das Netzwerkgerät, der Anforderung für die VDI-Sitzung vor ihrem Weiterleiten in eine Anforderung für eine begrenzte VDI-Sitzung konfiguriert ist.

**8.** Netzwerkgerät nach Anspruch 7, wobei der Prozessor zum Verweigern der Anforderung für die VDI-Sitzung konfiguriert ist, wenn die Anzahl von aktuellen VDI-Sitzungen gleich einer maximalen Schwellenkapazität für das Netzwerkgerät ist.

**9.** Netzwerkgerät nach einem der Ansprüche 7-8, wobei die Kommunikationsschnittstelle zum Empfangen eines mit der Anforderung für die VDI-Sitzung assoziierten Prioritätswertes von einer Identitätsdienstemaschine konfiguriert ist.

**10.** Netzwerkgerät nach Anspruch 9, wobei der Prozessor zum Weiterleiten der Anforderung für die VDI-Sitzung konfiguriert ist, wenn der Prioritätswert größer ist als ein vorbestimmter Schwellenprioritätswert.

**11.** Netzwerkgerät nach Anspruch 10, wobei der Prozessor ferner zum Modifizieren der Anforderung für die VDI-Sitzung in eine Anforderung für eine begrenzte VDI-Sitzung konfiguriert ist, wenn der Prioritätswert kleiner ist als der vorbestimmte Schwellenprioritätswert.

**12.** Netzwerkgerät nach Anspruch 11, wobei der Prozessor zum Hosten eines generischen Desktop mit wenigstens einer missionskritischen Anwendung, aber weniger als einen kompletten Desktop für einen Benutzer konfiguriert ist, der die Anforderung für die VDI-Sitzung eingeleitet hat.

**13.** Computerlesbares Speichermedium, auf dem Befehle gespeichert sind, wobei die gespeicherten Befehle von einem Prozessor (213) ausgeführt werden können zum:

Empfangen, an einem Netzwerkgerät (101), einer Anforderung für eine neue Sitzung, die von einem VDI-(Virtual Desktop Interface)-Server (105) gehostet werden soll;
Vergleichen einer Anzahl von aktuell von dem VDI-(Virtual Desktop Interface)-Server über das Netzwerkgerät gehosteten Sitzungen mit einer vorbestimmten Schwellenkapazität des Netzwerkgeräts;
Weiterleiten der Anforderung für die neue Sitzung zu dem VDI-Server, wenn die Anzahl von Sitzungen kleiner ist als die vorbestimmte Schwellenkapazität, und **dadurch gekennzeichnet, dass** die Befehle ausgeführt werden können, um, wenn die Anzahl von aktuell gehosteten Sitzungen größer ist als die vorbestimmte Schwellenkapazität des Netzwerkgeräts, die Anforderung für die neue Sitzung vor ihrem Weiterleiten in eine Anforderung für eine begrenzte VDI-Sitzung zu modifizieren.

14. Computerlesbares Speichermedium nach Anspruch 13, das ferner Befehle umfasst, die von dem Prozessor ausgeführt werden können zum:

Empfangen einer mit der neuen Sitzung assoziierten Priorität von einer Identitätsdienstemaschine; und
Ausführen von wenigstens einer Anwendung an dem Netzwerkgerät als Reaktion darauf, dass die Anzahl von Sitzungen größer ist als die vorbestimmte Schwellenkapazität und die Priorität höher ist als eine vorbestimmte Prioritätsschwelle, das optional ferner Befehle umfasst, die von dem Prozessor ausgeführt werden können zum:
Erzeugen einer Verweigerungsnachricht, die anzeigt, dass die neue Sitzung als Reaktion darauf verweigert wurde, dass die Anzahl von Sitzungen größer ist als die vorbestimmte Schwellenkapazität und die Priorität niedriger ist als die vorbestimmte Prioritätsschwelle; und
Übertragen der Verweigerungsnachricht für den Empfang durch ein Client-Gerät, das die neue Sitzung angefordert hat.

15. Computerlesbares Speichermedium nach einem der Ansprüche 13-14, das ferner Befehle umfasst, die von dem Prozessor ausgeführt werden können zum:

Bereitstellen eines generischen Desktop einem Client-Gerät als Reaktion auf die Anforderung für die neue Sitzung, wobei der generische Desktop die wenigstens eine am Netzwerkgerät ausgeführte Anwendung beinhaltet, das ferner optional Befehle umfasst, die von dem Prozessor ausgeführt werden können zum:

Zugreifen auf eine Richtlinie eines Benutzers des Client-Geräts von einer Richtliniendatenbank (219), wobei die Richtliniendatenbank den Benutzer mit der wenigstens einen Anwendung assoziiert, die von einer Jobfunktion oder Klassifikation des Benutzers definiert wird; und
Definieren des generischen Desktop gemäß der Jobfunktion oder Klassifikation des Benutzers.

## Revendications

1. Procédé comportant les étapes consistant à :

détecter, par le biais d'un processeur (123) au niveau d'un routeur de branche (101), un nombre de sessions hébergées par un serveur VDI (virtual desktop interface - interface de bureau virtuel) (105) qui sont gérées par le routeur de branche (101) (S101);
effectuer, par le biais du processeur, une comparaison du nombre de sessions par rapport à une capacité de seuil prédéterminée du routeur de branche (S103);
recevoir au niveau du routeur de branche une demande d'une nouvelle session destinée à être hébergée par le serveur VDI (S105) ; et
réacheminer la demande de nouvelle session en fonction de la comparaison du nombre de sessions par rapport à la capacité de seuil prédéterminée (S107), **caractérisé par**, si le nombre de sessions est supérieur à la capacité de seuil prédéterminée du routeur de branche, avant tout réacheminement de la demande au serveur VDI, la modification de la demande de nouvelle session en une demande de session VDI limitée.

2. Procédé selon la revendication 1, dans lequel le nombre de sessions est supérieur à la capacité de seuil prédéterminée et inférieur à une capacité de seuil maximum pour le routeur de branche.

3. Procédé selon la revendication 2, comportant par ailleurs l'étape consistant à :

recevoir une priorité associée à la nouvelle session en provenance d'un moteur de services d'identité, comportant éventuellement par ailleurs les étapes consistant à :

établir la nouvelle session quand la priorité est une priorité élevée ; et

refuser la nouvelle session quand la priorité est une faible priorité.

4. Procédé selon l'une quelconque des revendications 1 à 3, comportant par ailleurs l'étape consistant à :

établir la nouvelle session avec un bureau générique comprenant une ou plusieurs applications configurées à des fins d'exécution par le serveur VDI, éventuellement dans lequel le bureau générique comprend au moins une application définie en fonction d'une politique d'un utilisateur qui a initialisé la demande de nouvelle session.

5. Procédé selon l'une quelconque des revendications 1 à 4, comportant par ailleurs les étapes consistant à :

surveiller le nombre de sessions par rapport à la capacité de seuil prédéterminée ; et
connecter la nouvelle session à un centre de données (104) quand le nombre de sessions est inférieur à la capacité de seuil prédéterminée.

6. Procédé selon l'une quelconque des revendications 1 à 5, comportant par ailleurs les étapes consistant à :

générer un message comprenant des données indiquant la comparaison du nombre de sessions par rapport à la capacité de seuil prédéterminée ; et
envoyer le message à un serveur de gestion (303).

7. Dispositif de réseau (101) comportant :

une interface de communication (217) configurée pour recevoir une demande de session VDI (virtual desktop interface - interface de bureau virtuel) avec un serveur VDI ;
une mémoire (211) configurée pour stocker des données indiquant un nombre de sessions VDI en cours gérées par le dispositif de réseau qui sont hébergées par le serveur VDI et une capacité de seuil prédéterminée pour le dispositif de réseau ; et
un processeur (213) configuré pour comparer le nombre de sessions VDI en cours par rapport à la capacité de seuil prédéterminée pour le dispositif de réseau, et pour réacheminer la demande si le nombre de sessions VDI en cours est inférieur à la capacité de seuil prédéterminée pour le dispositif de réseau, **caractérisé en ce qu'**il est par ailleurs configuré pour, si le nombre de sessions VDI en cours est supérieur à la capacité de seuil prédéterminée pour le dispositif de réseau, avant tout réacheminement de la demande, modifier la demande de session VDI en une demande de session VDI limitée.

8. Dispositif de réseau selon la revendication 7, dans lequel le processeur est configuré pour refuser la demande de session VDI si le nombre de sessions VDI en cours est égal à une capacité de seuil maximum pour le dispositif de réseau.

9. Dispositif de réseau selon l'une quelconque des revendications 7 à 8, dans lequel l'interface de communication est configurée pour recevoir une valeur de priorité associée à la demande de session VDI en provenance d'un moteur de services d'identité.

10. Dispositif de réseau selon la revendication 9, dans lequel le processeur est configuré pour réacheminer la demande de session VDI si la valeur de priorité est supérieure à une valeur de priorité de seuil prédéterminée.

11. Dispositif de réseau selon la revendication 10, dans lequel le processeur est configuré pour modifier la demande de session VDI en une demande de session VDI limitée si la valeur de priorité est inférieure à la valeur de priorité de seuil prédéterminée.

12. Dispositif de réseau selon la revendication 11, dans lequel le processeur est configuré pour héberger un bureau générique comprenant au moins une application cruciale à la mission mais inférieur à un bureau complet pour un utilisateur qui a initialisé la demande de session VDI.

13. Support de stockage lisible par ordinateur stockant des instructions, les instructions stockées étant exécutables par un processeur (213) pour :

recevoir, au niveau d'un dispositif de réseau (101), une demande de nouvelle session destinée à être hébergée par un serveur VDI (virtual desktop interface - interface de bureau virtuel) (105) ;

comparer un nombre de sessions actuellement hébergées par le serveur VDI (virtual desktop interface - interface de bureau virtuel) par le biais du dispositif de réseau par rapport à une capacité de seuil prédéterminée du dispositif de réseau ;

réacheminer la demande de nouvelle session au serveur VDI quand le nombre de sessions est inférieur à la capacité de seuil prédéterminée, et **caractérisé en ce que** les instructions sont exécutables pour, si le nombre de sessions actuellement hébergées est supérieur à la capacité de seuil prédéterminée du dispositif de réseau, avant tout réacheminement de la demande, modifier la demande de nouvelle session en une demande de session VDI limitée.

**14.** Support de stockage lisible par ordinateur selon la revendication 13, comportant par ailleurs des instructions exécutables par le processeur pour :

recevoir une priorité associée à la nouvelle session en provenance d'un moteur de services d'identité ; et exécuter au moins une application au niveau du dispositif de réseau en réponse au nombre de sessions qui est supérieur à la capacité de seuil prédéterminée et à la priorité qui est supérieure à un seuil de priorité prédéterminé, comportant éventuellement par ailleurs des instructions exécutables par le processeur pour :

générer un message de refus indiquant que la nouvelle session a été refusée en réponse au nombre de sessions qui est supérieur à la capacité de seuil prédéterminée et à la priorité qui est inférieure au seuil de priorité prédéterminé ; et transmettre le message de refus à des fins de réception par un dispositif client qui a demandé la nouvelle session.

**15.** Support de stockage lisible par ordinateur selon l'une quelconque des revendications 13 et 14, comportant par ailleurs des instructions exécutables par le processeur pour :

fournir un bureau générique à un dispositif client en réponse à la demande de nouvelle session, dans lequel le bureau générique comprend ladite au moins une application exécutée au niveau du dispositif de réseau, comportant éventuellement par ailleurs des instructions exécutables par le processeur pour :

accéder à une politique d'un utilisateur du dispositif client en provenance d'une base de données de politiques (219), dans lequel la base de données de politiques associe l'utilisateur avec ladite au moins une application définie par une fonction de poste ou une classification de l'utilisateur ; et définir le bureau générique en fonction de la fonction de poste ou de la classification de l'utilisateur.

100

Branch Location

103

Client Device

101

Branch Router

102 — Compute Blade

109

Network

104

Data Center

107

Data Center Router

105

VDI Server

FIG. 1

101

213

211

Memory

Controller

219

217

Communication
Interface

Compute
Blade

102

FIG. 2

FIG. 3

Detect a number of sessions hosted by a virtual desktop interface (VDI) server.    S101

Perform a comparison of the number of sessions to a predetermined threshold capacity.    S103

Receive a request for a new session to be hosted by the VDI server.    S105

Forward the request for the new session according to the comparison of the number of sessions to the predetermined threshold capacity.    S107

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8141075 B1